# EUROPÄISCHE PATENTSCHRIFT

(11) **EP 3 248 357 B1**
(45) Veröffentlichungstag und Bekanntmachung des Hinweises auf die Patenterteilung: **10.06.2020**
(21) Anmeldenummer: 16701105.5
(22) Anmeldetag: 18.01.2016
(51) Int. Cl.: H04L 29/06, H04L 9/00, H04L 9/32

(54) **ZERTIFIKATS-TOKEN ZUM BEREITSTELLEN EINES DIGITALEN ZERTIFIKATS EINES NUTZERS**
CERTIFICATE TOKEN FOR PROVIDING A DIGITAL CERTIFICATE OF A USER
JETON DE CERTIFICAT PERMETTANT DE METTRE À DISPOSITION UN CERTIFICAT NUMÉRIQUE D'UN UTILISATEUR

(30) Priorität: 23.01.2015 DE 102015101014
(43) Veröffentlichungstag der Anmeldung: 29.11.2017
(73) Patentinhaber: Bundesdruckerei GmbH, 10969 Berlin (DE)
(72) Erfinder: MÖSER, Robert, 12167 Berlin (DE); WEISS, Niklas, 12489 Berlin (DE); MORGNER, Frank, 15537 Grünheide (DE); DREBES, Jürgen, 13591 Berlin (DE); HOLINSKI, Denis, 13055 Berlin (DE); BARTOCHA, Alexa, 10777 Berlin (DE)
(74) Vertreter: Patentship Patentanwaltsgesellschaft mbH
(86) Internationale Anmeldenummer: PCT/EP2016/050873
(87) Internationale Veröffentlichungsnummer: WO 2016/116392

(56) Entgegenhaltungen:
- US-A1- 2002 176 583
- US-A1- 2006 095 771
- NYSTROM B KALISKI RSA SECURITY M: "PKCS #10: Certification Request Syntax Specification Version 1.7; rfc2986.txt", 5. JCT-VC MEETING; 96. MPEG MEETING; 16-3-2011 - 23-3-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/, INTERNET ENGINEERING TASK FORCE, IETF, CH, 1. November 2000 (2000-11-01), XP015008769, ISSN: 0000-0003
- ADAMS UNIVERSITY OF OTTAWA S FARRELL TRINITY COLLEGE DUBLIN T KAUSE SSH T MONONEN SAFENET C: "Internet X.509 Public Key Infrastructure Certificate Management Protocol (CMP); rfc4210.txt", INTERNET X.509 PUBLIC KEY INFRASTRUCTURE CERTIFICATE MANAGEMENT PROTOCOL (CMP)?; RFC4210.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 September 2005 (2005-09-01), XP015041820,

## Beschreibung

Die vorliegende Erfindung betrifft das Gebiet der Bereitstellung digitaler Zertifikate.

Digitale Zertifikate werden im Bereich asymmetrischer kryptographischer Systeme eingesetzt, um einen öffentlichen kryptographischen Schlüssel einem Nutzer zuzuordnen. Der Nutzer kann unter Verwendung eines zugehörigen privaten kryptographischen Schlüssels eine Vielzahl verschiedener kryptographischer Funktionen, wie beispielsweise eine digitale Datenverschlüsselung oder eine digitale Datensignierung, nutzen.

Die Zuordnung zwischen dem öffentlichen kryptographischen Schlüssel und dem Nutzer kann durch einen Zertifizierungsdiensteanbieter (ZDA) beglaubigt werden. Dadurch kann die Authentizität der Zuordnung gegenüber weiteren Nutzern des asymmetrischen kryptographischen Systems bestätigt werden. Die digitalen Zertifikate sowie die zugehörigen kryptographischen Schlüssel können auf einem Zertifikats-Token des Nutzers, beispielsweise einer Smartcard, gespeichert werden.

Zur Bereitstellung eines digitalen Zertifikats wird zunächst eine Identifizierung des Nutzers durchgeführt. Die Identifizierung des Nutzers kann dabei durch den Zertifizierungsdiensteanbieter durchgeführt werden. Nach erfolgreicher Identifizierung des Nutzers wird das digitale Zertifikat unmittelbar erzeugt und auf das Zertifikats-Token des Nutzers aufgebracht. Bei einer Erneuerung des digitalen Zertifikats, beispielsweise aufgrund eines Wechsels des Zertifizierungsdiensteanbieters oder aufgrund eines zeitlichen Ablaufs der Gültigkeit des digitalen Zertifikats, wird jeweils ein neues digitales Zertifikat erzeugt. Dabei ist eine erneute Identifizierung des Nutzers erforderlich.

Die erneute Identifizierung des Nutzers ist jedoch mit hohem Aufwand für den Nutzer und den Zertifizierungsdiensteanbieter verbunden und schränkt den Nutzer in seiner Wahlfreiheit bezüglich des Zertifizierungsdiensteanbieters ein.

Die Druckschrift US 2002/0176583 A1 zeigt einen Token umfassend eine Speichervorrichtung, in welcher ein privater und ein öffentlicher Schlüssel eines Nutzers gespeichert sind. Während eines Registrierungsverfahrens werden biometrische Daten des Nutzers in dem Token gespeichert.

Die Druckschrift US 2006/0095771 A1 zeigt eine Sicherheitsvorrichtung, in welcher Authentifizierungsschlüsselinformationen, Signaturschlüsselinformationen und Entschlüsselungs-/Verschlüsselungsschlüsselinformationen gespeichert sind. Die Authentifizierungsschlüsselinformationen umfassen zum Beispiel Nutzer-Authentifizierungsinformationen, wie beispielsweise einen Namen eines Nutzers.

Es ist eine Aufgabe der vorliegenden Erfindung, ein effizientes Konzept zum Bereitstellen eines digitalen Zertifikats eines Nutzers zu schaffen.

Diese Aufgabe wird durch die Merkmale der unabhängigen Ansprüche gelöst. Vorteilhafte Weiterbildungsformen sind Gegenstand der abhängigen Patentansprüche, der Beschreibung sowie der Figuren.

Die Erfindung basiert auf der Erkenntnis, dass die obige Aufgabe durch ein Zertifikats-Token eines Nutzers gelöst werden kann, welches ein signiertes Personendatum zur Erzeugung des digitalen Zertifikats umfasst, und welches ausgebildet ist, einen öffentlichen Zertifikatsschlüssel des digitalen Zertifikats zu erzeugen. Das Zertifikats-Token ist ausgebildet, das signierte Personendatum und den öffentlichen Zertifikatsschlüssel an einen elektronischen Zertifizierungsdienst zur Erzeugung des digitalen Zertifikats über ein Kommunikationsnetzwerk zu übertragen, und das digitale Zertifikat von dem elektronischen Zertifizierungsdienst zu empfangen. Der elektronische Zertifizierungsdienst kann beispielweise ein Zertifizierungsdiensteanbieter (ZDA) oder eine Zertifizierungsstelle (Certification Authority, CA) sein.

Das signierte Personendatum kann durch einen Identifizierungsdienst zur Identifizierung des Nutzers signiert sein, wobei der Identifizierungsdienst beispielsweise eine Registrierungsstelle (Registration Authority, RA) sein kann. Der elektronische Zertifizierungsdienst kann die Signatur des signierten Personendatums verifizieren.

Das Zertifikats-Token kann ferner ein Wurzelzertifikat, beispielsweise ein CVCA-Zertifikat, umfassen, wodurch eine Authentizität des elektronischen Zertifizierungsdienstes durch das Zertifikats-Token verifiziert werden kann. Das Wurzelzertifikat, beispielsweise das CVCA-Zertifikat, kann durch ein Produktionssystem, mit welchem das Zertifikats-Token hergestellt wird, auf das Zertifikats-Token aufgebracht werden. Zwischen dem Zertifikats-Token und dem elektronischen Zertifizierungsdienst kann eine authentifizierte und/oder verschlüsselte Kommunikationsverbindung unter Verwendung eines Password Authenticated Connection Establishment (PACE) Protokolls, eines Terminal Authentication (TA) Protokolls, und/oder eines Chip Authentication (CA) Protokolls aufgebaut werden.

Zur erneuten Bereitstellung eines digitalen Zertifikats kann auf eine erneute Identifizierung des Nutzers und ein Vorhalten des Personendatums durch den elektronischen Zertifizierungsdienst verzichtet werden. Die Bereitstellung des digitalen Zertifikats kann auf Basis des im Zertifikats-Token gespeicherten signierten Personendatums unter Verwendung eines beliebigen elektronischen Zertifizierungsdienstes durchgeführt werden.

Gemäß einem ersten Aspekt betrifft die Erfindung ein Zertifikats-Token zum Bereitstellen eines digitalen Zertifikats eines Nutzers, mit einem Speicher, welcher ausgebildet ist, ein signiertes Personendatum des Nutzers und das digitale Zertifikat des Nutzers zu speichern, einem Prozessor, welcher ausgebildet ist, einen öffentlichen Zertifikatsschlüssel des digitalen Zertifikats zu erzeugen, und einer Kommunikationsschnittstelle, welche ausgebildet ist, das signierte Personendatum und den öffentlichen Zertifikatsschlüssel für eine Übermittlung über ein Kommunikationsnetzwerk an einen elektronischen Zertifizierungsdienst bereitzustellen, und, ansprechend auf die Bereitstellung des signierten Personendatums und des öffentlichen Zertifikatsschlüssels, das digitale Zertifikat des Nutzers von dem elektronischen Zertifizierungsdienst zu empfangen, um das digitale Zertifikat bereitzustellen. Dadurch wird der Vorteil erreicht, dass ein effizientes Konzept zum Bereitstellen eines digitalen Zertifikats eines Nutzers realisiert werden kann.

Das Zertifikats-Token kann aktiv oder passiv sein. Das Zertifikats-Token kann beispielsweise eine Smartcard oder ein USB-Token sein. Das Zertifikats-Token kann einen elektronisch auslesbaren Schaltkreis umfassen. Das Zertifikats-Token kann in Hardware oder Software realisiert sein.

Das Zertifikats-Token kann ferner ein Identifikationsdokument des Nutzers sein. Das Identifikationsdokument kann eines der folgenden Identifikationsdokumente sein: Identitätsdokument, wie Personalausweis, Reisepass, Zugangskontrollausweis, Berechtigungsausweis, Unternehmensausweis, Steuerzeichen oder Ticket, Geburtsurkunde, Führerschein oder Kraftfahrzeugausweis, Zahlungsmittel, beispielsweise eine Bankkarte oder Kreditkarte. Das Identifikationsdokument kann ein- oder mehrlagig bzw. papier- und/oder kunststoffbasiert sein. Das Identifikationsdokument kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen.

Der Speicher kann durch eine elektronische Speicherbaugruppe gebildet sein. Der Prozessor kann ein Mikroprozessor sein. Die Kommunikationsschnittstelle kann drahtlos oder drahtgebunden kommunizieren. Der Speicher, der Prozessor und die Kommunikationsschnittstelle sind gegenseitig miteinander verbunden.

Das digitale Zertifikat kann ein Public-Key-Zertifikat sein. Das digitale Zertifikat kann das signierte Personendatum dem öffentlichen Zertifikatsschlüssel eindeutig zuordnen. Der öffentliche Zertifikatsschlüssel kann dem digitalen Zertifikat zugeordnet sein. Das digitale Zertifikat kann beispielsweise gemäß dem X.509 Standard formatiert sein. Das signierte Personendatum kann beispielsweise einen Namen des Nutzers, eine Anschrift des Nutzers, und/oder eine Organisationszugehörigkeit des Nutzers umfassen.

Das Kommunikationsnetzwerk kann durch eine Mehrzahl von Servern gebildet sein. Das Kommunikationsnetzwerk kann beispielsweise das Internet sein. Der elektronische Zertifizierungsdienst kann beispielsweise ein Zertifizierungsdiensteanbieter (ZDA) oder eine Zertifizierungsstelle (Certification Authority, CA) sein. Der elektronische Zertifizierungsdienst kann auf Basis des signierten Personendatums des Nutzers und des öffentlichen Zertifikatsschlüssels das digitale Zertifikat des Nutzers erzeugen.

Gemäß einer Ausführungsform ist der Speicher des Zertifikats-Tokens nur bzw. ausschließlich mittels des Prozessors auslesbar. Dadurch kann eine noch höhere Sicherheit gegen Fälschungen erreicht werden.

Gemäß einer Ausführungsform ist das signierte Personendatum des Nutzers mit einem privaten Signaturschlüssel eines Identifizierungsdienstes zum Identifizieren des Nutzers signiert. Dadurch wird der Vorteil erreicht, dass die Authentizität des Personendatums verifiziert werden kann.

Der Identifizierungsdienst kann beispielsweise eine Registrierungsstelle (Registration Authority, RA) sein. Der private Signaturschlüssel des Identifizierungsdienstes kann mit einem öffentlichen Signaturprüfschlüssel des Identifizierungsdienstes ein kryptographisches Schlüsselpaar bilden. Das signierte Personendatum kann mittels des öffentlichen Signaturprüfschlüssels des Identifizierungsdienstes verifiziert werden.

Gemäß einer Ausführungsform umfasst das signierte Personendatum einen Zeitstempel, wobei der Zeitstempel einen Zeitpunkt einer Erzeugung des signierten Personendatums anzeigt. Dadurch wird der Vorteil erreicht, dass eine Aktualität des signierten Personendatums verifiziert werden kann.

Der Zeitstempel kann den Zeitpunkt der Erzeugung des signierten Personendatums in Form eines Datums und/oder einer Uhrzeit anzeigen. Der Zeitstempel kann durch den Identifizierungsdienst bei der Identifizierung des Nutzers in das signierte Personendatum eingebettet werden.

Gemäß einer Ausführungsform ist der Speicher ausgebildet, ein Wurzelzertifikat, insbesondere ein CVCA-Zertifikat, zu speichern, wobei der Prozessor ausgebildet ist, eine Authentizität des elektronischen Zertifizierungsdienstes unter Verwendung des Wurzelzertifikats, insbesondere des CVCA-Zertifikats, zu verifizieren. Dadurch wird der Vorteil erreicht, dass die Authentizität des elektronischen Zertifizierungsdienstes vor der Übermittlung des signierten Personendatums und des öffentlichen Zertifikatsschlüssels durch das Zertifikats-Token verifiziert werden kann.

Das Wurzelzertifikat kann ein selbst-signiertes Zertifikat sein. Das Wurzelzertifikat kann einen Vertrauensanker bilden. Das Wurzelzertifikat kann durch ein Produktionssystem auf das Zertifikats-Token aufgebracht werden. Das CVCA-Zertifikat (Country Verifying Certificate Authority Zertifikat) kann einer hoheitlichen Zertifizierungsstelle zugeordnet sein.

Gemäß einer Ausführungsform ist der Prozessor ausgebildet, einen privaten Zertifikatsschlüssel des digitalen Zertifikats zu erzeugen, wobei der private Zertifikatsschlüssel und der öffentliche Zertifikatsschlüssel ein kryptographisches Schlüsselpaar bilden. Dadurch wird der Vorteil erreicht, dass kryptographische Funktionen unter Verwendung des Zertifikats-Tokens realisiert werden können.

Der private Zertifikatsschlüssel kann zur Verschlüsselung und/oder Signierung von Daten des Nutzers eingesetzt werden. Der private Zertifikatsschlüssel kann dem digitalen Zertifikat zugeordnet sein.

Gemäß einer Ausführungsform ist das digitale Zertifikat ein Signaturzertifikat zur Signierung von Daten des Nutzers, oder ein Authentifizierungszertifikat zur Authentifizierung des Nutzers. Dadurch wird der Vorteil erreicht, dass kryptographische Funktionen unter Verwendung des Zertifikats-Tokens realisiert werden können.

Das digitale Zertifikat kann ferner ein Verschlüsselungszertifikat zur Verschlüsselung von Daten des Nutzers sein. Der öffentliche Zertifikatsschlüssel kann hierfür durch den elektronischen Zertifizierungsdienst erzeugt werden. Ferner kann ein zugehöriger privater Zertifikatsschlüssel durch den elektronischen Zertifizierungsdienst erzeugt werden, wobei der öffentliche Zertifikatsschlüssel und der private Zertifikatsschlüssel ein kryptographisches Schlüsselpaar bilden.

Gemäß einem zweiten Aspekt betrifft die Erfindung ein Verfahren zum Bereitstellen eines digitalen Zertifikats eines Nutzers unter Verwendung eines Zertifikats-Tokens und eines elektronischen Zertifizierungsdienstes, wobei das Zertifikats-Token einen Speicher, einen Prozessor und eine Kommunikationsschnittstelle umfasst, wobei der Speicher ausgebildet ist, ein signiertes Personendatum des Nutzers und das digitale Zertifikat des Nutzers zu speichern, wobei der Prozessor ausgebildet ist, einen öffentlichen Zertifikatsschlüssel des digitalen Zertifikats zu erzeugen, wobei die Kommunikationsschnittstelle ausgebildet ist, das signierte Personendatum und den öffentlichen Zertifikatsschlüssel für eine Übermittlung über ein Kommunikationsnetzwerk an den elektronischen Zertifizierungsdienst bereitzustellen, und, ansprechend auf die Bereitstellung des signierten Personendatums und des öffentlichen Zertifikatsschlüssels, das digitale Zertifikat des Nutzers von dem elektronischen Zertifizierungsdienst zu empfangen, um das digitale Zertifikat bereitzustellen, und wobei das Verfahren die folgenden Schritte umfasst: Bereitstellen des signierten Personendatums und des öffentlichen Zertifikatsschlüssels durch die Kommunikationsschnittstelle des Zertifikats-Tokens, Übertragen des signierten Personendatums und des öffentlichen Zertifikatsschlüssels zu dem elektronischen Zertifizierungsdienst über das Kommunikationsnetzwerk, Verifizieren des signierten Personendatums durch den elektronischen Zertifizierungsdienst, Erzeugen des digitalen Zertifikats des Nutzers durch den elektronischen Zertifizierungsdienst auf Basis des signierten Personendatums und des öffentlichen Zertifikatsschlüssels, Aussenden des digitalen Zertifikats des Nutzers durch den elektronischen Zertifizierungsdienst an das Zertifikats-Token, und Speichern des digitalen Zertifikats des Nutzers in dem Speicher des Zertifikats-Tokens. Dadurch wird der Vorteil erreicht, dass ein effizientes Konzept zum Bereitstellen eines digitalen Zertifikats eines Nutzers realisiert werden kann.

Gemäß einer Ausführungsform wird der Speicher des Zertifikats-Tokens nur bzw. ausschließlich mittels des Prozessors ausgelesen. Dadurch kann eine noch höhere Sicherheit gegen Fälschungen erreicht werden.

Das Verfahren zum Bereitstellen eines digitalen Zertifikats eines Nutzers kann mittels des Zertifikats-Tokens zum Bereitstellen eines digitalen Zertifikats eines Nutzers durchgeführt werden. Weitere Merkmale des Verfahrens zum Bereitstellen eines digitalen Zertifikats eines Nutzers ergeben sich unmittelbar aus der Funktionalität des Zertifikats-Tokens zum Bereitstellen eines digitalen Zertifikats eines Nutzers.

Gemäß einer Ausführungsform werden das signierte Personendatum und der öffentliche Zertifikatsschlüssel im Schritt des Bereitstellens an den elektronischen Zertifizierungsdienst über das Kommunikationsnetzwerk durch die Kommunikationsschnittstelle ausgesendet, oder werden das signierte Personendatum und der öffentliche Zertifikatsschlüssel im Schritt des Bereitstellens durch den elektronischen Zertifizierungsdienst über das Kommunikationsnetzwerk über die Kommunikationsschnittstelle ausgelesen. Dadurch wird der Vorteil erreicht, dass das signierte Personendatum und der öffentliche Zertifikatsschlüssel unter Verwendung aktiver oder passiver Zertifikats-Token an den elektronischen Zertifizierungsdienst übertragen werden können.

Gemäß einer Ausführungsform ist das signierte Personendatum des Nutzers mit einem privaten Signaturschlüssel eines Identifizierungsdienstes zum Identifizieren des Nutzers signiert, wobei das Verifizieren des signierten Personendatums durch den elektronischen Zertifizierungsdienst mittels eines öffentlichen Signaturprüfschlüssels des Identifizierungsdienstes durchgeführt wird, und wobei der private Signaturschlüssel des Identifizierungsdienstes und der öffentliche Signaturprüfschlüssel des Identifizierungsdienstes ein kryptographisches Schlüsselpaar bilden. Dadurch wird der Vorteil erreicht, dass die Authentizität des Personendatums durch den elektronischen Zertifizierungsdienst verifiziert werden kann.

Gemäß einer Ausführungsform umfasst das Verifizieren des signierten Personendatums durch den elektronischen Zertifizierungsdienst ein Extrahieren eines Personendatums des Nutzers aus dem signierten Personendatum des Nutzers und ein Vergleichen des extrahierten Personendatums des Nutzers mit einer Sperrliste durch den elektronischen Zertifizierungsdienst, wobei die Sperrliste eine Mehrzahl gesperrter Personendaten umfasst, und wobei das signierte Personendatum nicht verifiziert ist falls die Sperrliste das Personendatum des Nutzers umfasst. Dadurch wird der Vorteil erreicht, dass das digitale Zertifikat nur dann erzeugt wird falls die Sperrliste das Personendatum des Nutzers nicht umfasst.

Die Sperrliste kann in einer Datenbank des elektronischen Zertifizierungsdienstes gespeichert sein. Die Sperrliste kann eine Zertifikatssperrliste (Certificate Revocation List, CRL) bilden.

Gemäß einer Ausführungsform umfasst das signierte Personendatum einen Zeitstempel, wobei der Zeitstempel einen Zeitpunkt einer Erzeugung des signierten Personendatums anzeigt, wobei das Verifizieren des signierten Personendatums durch den elektronischen Zertifizierungsdienst ein Bestimmen des Zeitpunkts der Erzeugung des signierten Personendatums auf Basis des Zeitstempels und ein Vergleichen des bestimmten Zeitpunktes mit einem Referenzzeitpunkt umfasst, und wobei das signierte Personendatum nicht verifiziert ist falls eine Zeitdifferenz zwischen dem bestimmten Zeitpunkt und dem Referenzzeitpunkt eine vorbestimmte Zeitdifferenz überschreitet. Dadurch wird der Vorteil erreicht, dass eine Aktualität des signierten Personendatums verifiziert werden kann.

Die vorbestimmte Zeitdifferenz kann beispielsweise 1 Stunde, 2 Stunden, 5 Stunden, 10 Stunden, 1 Tag, 2 Tage, 5 Tage, 10 Tage, 1 Monat, 2 Monate, 5 Monate, 10 Monate, 1 Jahr, 2 Jahre, 5 Jahre oder 10 Jahre betragen.

Gemäß einer Ausführungsform ist der Speicher ausgebildet, ein Wurzelzertifikat, insbesondere ein CVCA-Zertifikat, zu speichern, wobei das Übertragen des signierten Personendatums und des öffentlichen Zertifikatsschlüssels zu dem elektronischen Zertifizierungsdienst ein Verifizieren einer Authentizität des elektronischen Zertifizierungsdienstes unter Verwendung des Wurzelzertifikats, insbesondere des CVCA-Zertifikats, durch den Prozessor des Zertifikats-Tokens umfasst. Dadurch wird der Vorteil erreicht, dass die Authentizität des elektronischen Zertifizierungsdienstes vor der Übermittlung des signierten Personendatums und des öffentlichen Zertifikatsschlüssels durch das Zertifikats-Token verifiziert werden kann.

Das Zertifikats-Token kann hierfür eine Mehrzahl von Prüfzertifikaten von dem elektronischen Zertifizierungsdienst empfangen. Die Mehrzahl von Prüfzertifikaten kann eine kryptographische Zertifikatskette bilden. Die Mehrzahl von Prüfzertifikaten kann das Wurzelzertifikat, insbesondere das CVCA-Zertifikat, umfassen.

Der Prozessor des Zertifikats-Tokens kann das gespeicherte Wurzelzertifikat, insbesondere das gespeicherte CVCA-Zertifikat, mit der Mehrzahl von Prüfzertifikaten verknüpfen und/oder vergleichen, um die Authentizität des elektronischen Zertifizierungsdienstes zu verifizieren. Das Verifizieren der Authentizität des elektronischen Zertifizierungsdienstes kann unter Verwendung eines Terminal Authentication (TA) Protokolls durchgeführt werden.

Gemäß einer Ausführungsform wird zwischen dem Zertifikats-Token und dem elektronischen Zertifizierungsdienst eine authentifizierte und/oder verschlüsselte Kommunikationsverbindung unter Verwendung eines Password Authenticated Connection Establishment (PACE) Protokolls, eines Terminal Authentication (TA) Protokolls, und/oder eines Chip Authentication (CA) Protokolls aufgebaut. Dadurch wird der Vorteil erreicht, dass das signierte Personendatum und der öffentliche Zertifikatsschlüssel über die authentifizierte und/oder verschlüsselte Kommunikationsverbindung von dem Zertifikats-Token zu dem elektronischen Zertifizierungsdienst übertragen werden können. Ferner kann das digitale Zertifikat über die authentifizierte und/oder verschlüsselte Kommunikationsverbindung von dem elektronischen Zertifizierungsdienst zu dem Zertifikats-Token übertragen werden.

Das Password Authenticated Connection Establishment (PACE) Protokoll, das Terminal Authentication (TA) Protokoll, und/oder das Chip Authentication (CA) Protokoll kann beispielsweise auf Basis des technischen Standards BSI TR-03110 implementiert werden.

Gemäß einem dritten Aspekt betrifft die Erfindung ein Verfahren zum Herstellen eines Zertifikats-Tokens eines Nutzers unter Verwendung eines Identifizierungsdienstes und eines Produktionssystems, wobei das Zertifikats-Token einen Speicher, einen Prozessor und eine Kommunikationsschnittstelle umfasst, wobei der Speicher ausgebildet ist, ein signiertes Personendatum des Nutzers und ein digitales Zertifikat des Nutzers zu speichern, wobei der Prozessor ausgebildet ist, einen öffentlichen Zertifikatsschlüssel des digitalen Zertifikats zu erzeugen, wobei die Kommunikationsschnittstelle ausgebildet ist, das signierte Personendatum und den öffentlichen Zertifikatsschlüssel für eine Übermittlung über ein Kommunikationsnetzwerk an einen elektronischen Zertifizierungsdienst bereitzustellen, und, ansprechend auf die Bereitstellung des signierten Personendatums und des öffentlichen Zertifikatsschlüssels, das digitale Zertifikat des Nutzers von dem elektronischen Zertifizierungsdienst zu empfangen, um das digitale Zertifikat bereitzustellen, wobei dem Nutzer ein Personendatum zugeordnet ist, und wobei das Verfahren die folgenden Schritte umfasst: Signieren des Personendatums des Nutzers durch den Identifizierungsdienst mit einem privaten Signaturschlüssel des Identifizierungsdienstes, um das signierte Personendatum des Nutzers zu erhalten, und Speichern des signierten Personendatums des Nutzers in dem Speicher des Zertifikats-Tokens durch das Produktionssystem, um das Zertifikats-Token herzustellen. Dadurch wird der Vorteil erreicht, dass ein effizientes Konzept zum Bereitstellen eines digitalen Zertifikats eines Nutzers realisiert werden kann.

Der Identifizierungsdienst kann beispielsweise eine Registrierungsstelle (Registration Authority, RA) sein. Das Produktionssystem kann zur erstmaligen Personalisierung des Zertifikats-Tokens des Nutzers vorgesehen sein.

Das Zertifikats-Token zum Bereitstellen eines digitalen Zertifikats eines Nutzers kann mittels des Verfahrens zum Herstellen eines Zertifikats-Tokens eines Nutzers effizient hergestellt werden. Weitere Merkmale des Verfahrens zum Herstellen eines Zertifikats-Tokens eines Nutzers ergeben sich unmittelbar aus der Funktionalität des Zertifikats-Tokens zum Bereitstellen eines digitalen Zertifikats eines Nutzers, und/oder der Funktionalität des Verfahrens zum Bereitstellen eines digitalen Zertifikats eines Nutzers.

Gemäß einer Ausführungsform umfasst das Verfahren ferner: Bereitstellen eines Wurzelzertifikats, insbesondere eines CVCA-Zertifikats, durch das Produktionssystem, und Speichern des Wurzelzertifikats, insbesondere des CVCA-Zertifikats, in dem Speicher des Zertifikats-Tokens durch das Produktionssystem. Dadurch wird der Vorteil erreicht, dass eine Authentizität des elektronischen Zertifizierungsdienstes durch das Zertifikats-Token verifiziert werden kann.

Das Wurzelzertifikat, insbesondere das CVCA-Zertifikat, kann in einer Datenbank des Produktionssystems gespeichert sein.

Gemäß einem vierten Aspekt betrifft die Erfindung ein Computerprogramm mit einem Programmcode zum Ausführen des Verfahrens zum Bereitstellen eines digitalen Zertifikats eines Nutzers, wenn der Programmcode auf einem Computer ausgeführt wird. Dadurch wird der Vorteil erreicht, dass das Verfahren automatisiert ausgeführt werden kann.

Der Programmcode kann eine Folge von Befehlen für einen Prozessor des Computers umfassen. Der Programmcode kann in maschinen-lesbarer Form vorliegen.

Die Erfindung kann in Hardware und/oder Software realisiert werden.

Weitere Ausführungsbeispiele werden Bezug nehmend auf die beiliegenden Figuren näher erläutert. Es zeigen:
- Fig. 1: ein schematisches Diagramm eines Zertifikats-Tokens zum Bereitstellen eines digitalen Zertifikats eines Nutzers;
- Fig. 2: ein schematisches Diagramm eines Systems zum Bereitstellen eines digitalen Zertifikats eines Nutzers;
- Fig. 3: ein schematisches Diagramm eines Systems zum Herstellen eines Zertifikats-Tokens eines Nutzers;
- Fig. 4: ein schematisches Diagramm eines Verfahrens zum Bereitstellen eines digitalen Zertifikats eines Nutzers;
- Fig. 5: ein schematisches Diagramm eines Verfahrens zum Herstellen eines Zertifikats-Tokens eines Nutzers;
- Fig. 6: ein schematisches Diagramm eines Verfahrens zum Herstellen eines Zertifikats-Tokens eines Nutzers; und
- Fig. 7: ein schematisches Diagramm eines Verfahrens zum Bereitstellen eines digitalen Zertifikats eines Nutzers.

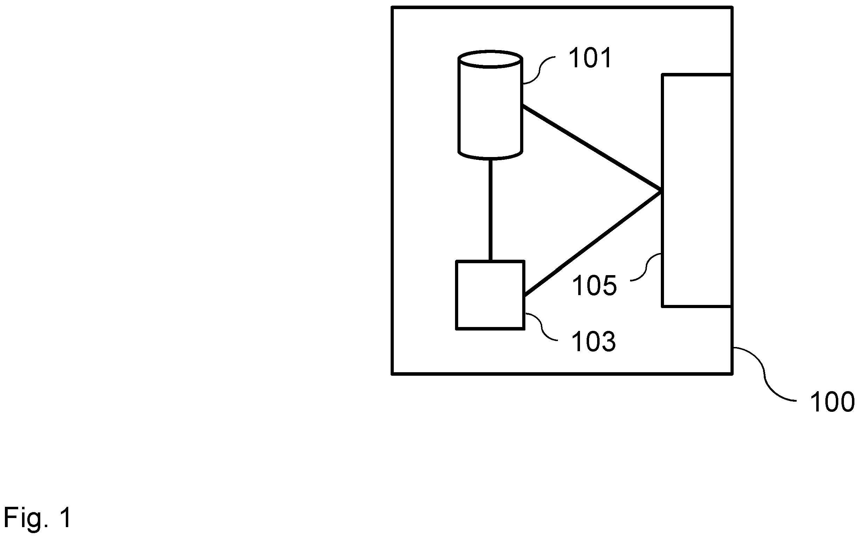

Fig. 1 zeigt ein schematisches Diagramm eines Zertifikats-Tokens 100 zum Bereitstellen eines digitalen Zertifikats eines Nutzers. Das Zertifikats-Token 100 umfasst einen Speicher 101, welcher ausgebildet ist, ein signiertes Personendatum des Nutzers und das digitale Zertifikat des Nutzers zu speichern, einen Prozessor 103, welcher ausgebildet ist, einen öffentlichen Zertifikatsschlüssel des digitalen Zertifikats zu erzeugen, und eine Kommunikationsschnittstelle 105, welche ausgebildet ist, das signierte Personendatum und den öffentlichen Zertifikatsschlüssel für eine Übermittlung über ein Kommunikationsnetzwerk an einen elektronischen Zertifizierungsdienst bereitzustellen, und, ansprechend auf die Bereitstellung des signierten Personendatums und des öffentlichen Zertifikatsschlüssels, das digitale Zertifikat des Nutzers von dem elektronischen Zertifizierungsdienst zu empfangen, um das digitale Zertifikat bereitzustellen.

Das Zertifikats-Token 100 kann aktiv oder passiv sein. Das Zertifikats-Token 100 kann beispielsweise eine Smartcard oder ein USB-Token sein. Das Zertifikats-Token 100 kann einen elektronisch auslesbaren Schaltkreis umfassen. Das Zertifikats-Token 100 kann in Hardware oder Software realisiert sein.

Gemäß einer Ausführungsform ist der Speicher 101 des Zertifikats-Tokens 100 nur bzw. ausschließlich mittels des Prozessors 103 auslesbar. Dadurch kann eine noch höhere Sicherheit gegen Fälschungen erreicht werden.

Das Zertifikats-Token 100 kann ferner ein Identifikationsdokument des Nutzers sein. Das Identifikationsdokument kann eines der folgenden Identifikationsdokumente sein: Identitätsdokument, wie Personalausweis, Reisepass, Zugangskontrollausweis, Berechtigungsausweis, Unternehmensausweis, Steuerzeichen oder Ticket, Geburtsurkunde, Führerschein oder Kraftfahrzeugausweis, Zahlungsmittel, beispielsweise eine Bankkarte oder Kreditkarte. Das Identifikationsdokument kann ein- oder mehrlagig bzw. papier- und/oder kunststoffbasiert sein. Das Identifikationsdokument kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen.

Der Speicher 101 kann durch eine elektronische Speicherbaugruppe gebildet sein. Der Prozessor 103 kann ein Mikroprozessor sein. Die Kommunikationsschnittstelle 105 kann drahtlos oder drahtgebunden kommunizieren. Der Speicher 101, der Prozessor 103 und die Kommunikationsschnittstelle 105 sind gegenseitig miteinander verbunden.

Das digitale Zertifikat kann ein Public-Key-Zertifikat sein. Das digitale Zertifikat kann das signierte Personendatum dem öffentlichen Zertifikatsschlüssel eindeutig zuordnen. Der öffentliche Zertifikatsschlüssel kann dem digitalen Zertifikat zugeordnet sein. Das digitale Zertifikat kann beispielsweise gemäß dem X.509 Standard formatiert sein. Das signierte Personendatum kann beispielsweise einen Namen des Nutzers, eine Anschrift des Nutzers, und/oder eine Organisationszugehörigkeit des Nutzers umfassen.

Das Kommunikationsnetzwerk kann durch eine Mehrzahl von Servern gebildet sein. Das Kommunikationsnetzwerk kann beispielsweise das Internet sein. Der elektronische Zertifizierungsdienst kann beispielsweise ein Zertifizierungsdiensteanbieter (ZDA) oder eine Zertifizierungsstelle (Certification Authority, CA) sein. Der elektronische Zertifizierungsdienst kann auf Basis des signierten Personendatums des Nutzers und des öffentlichen Zertifikatsschlüssels das digitale Zertifikat des Nutzers erzeugen.

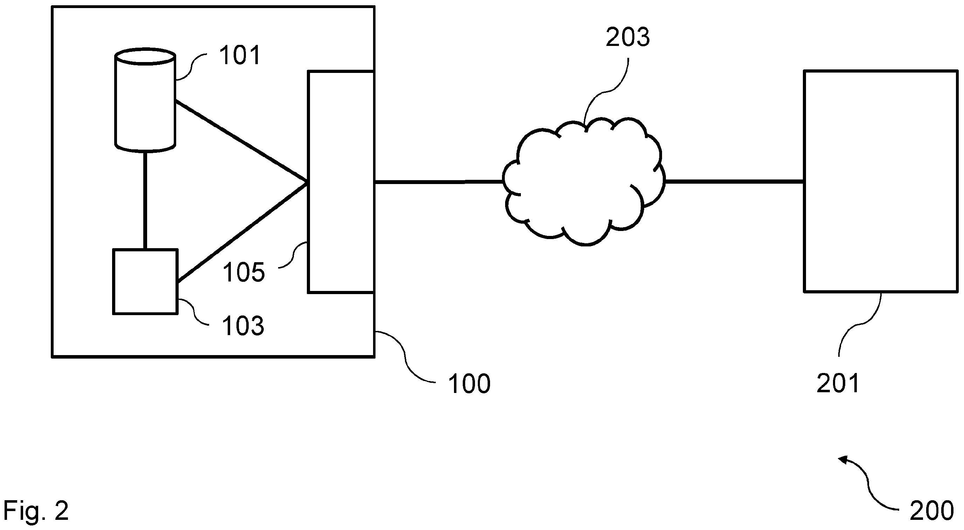

Fig. 2 zeigt ein schematisches Diagramm eines Systems 200 zum Bereitstellen eines digitalen Zertifikats eines Nutzers. Das System 200 umfasst ein Zertifikats-Token 100, einen elektronischen Zertifizierungsdienst 201, und ein Kommunikationsnetzwerk 203. Das Zertifikats-Token 100 umfasst einen Speicher 101, welcher ausgebildet ist, ein signiertes Personendatum des Nutzers und das digitale Zertifikat des Nutzers zu speichern, einen Prozessor 103, welcher ausgebildet ist, einen öffentlichen Zertifikatsschlüssel des digitalen Zertifikats zu erzeugen, und eine Kommunikationsschnittstelle 105, welche ausgebildet ist, das signierte Personendatum und den öffentlichen Zertifikatsschlüssel für eine Übermittlung über das Kommunikationsnetzwerk 203 an den elektronischen Zertifizierungsdienst 201 bereitzustellen, und, ansprechend auf die Bereitstellung des signierten Personendatums und des öffentlichen Zertifikatsschlüssels, das digitale Zertifikat des Nutzers von dem elektronischen Zertifizierungsdienst 201 zu empfangen, um das digitale Zertifikat bereitzustellen.

Der elektronische Zertifizierungsdienst 201 kann beispielsweise ein Zertifizierungsdiensteanbieter (ZDA) oder eine Zertifizierungsstelle (Certification Authority, CA) sein. Der elektronische Zertifizierungsdienst 201 kann auf Basis des signierten Personendatums des Nutzers und des öffentlichen Zertifikatsschlüssels das digitale Zertifikat des Nutzers erzeugen. Das Kommunikationsnetzwerk 203 kann durch eine Mehrzahl von Servern gebildet sein. Das Kommunikationsnetzwerk 203 kann beispielsweise das Internet sein.

Das Bereitstellen des digitalen Zertifikats des Nutzers kann folgendermaßen realisiert werden. Das signierte Personendatum und der öffentliche Zertifikatsschlüssel können durch die Kommunikationsschnittstelle 105 des Zertifikats-Tokens 100 bereitgestellt werden. Das signierte Personendatum und der öffentliche Zertifikatsschlüssel können an den elektronischen Zertifizierungsdienst 201 über das Kommunikationsnetzwerk 203 durch die Kommunikationsschnittstelle 105 ausgesendet werden, oder durch den elektronischen Zertifizierungsdienst 201 über das Kommunikationsnetzwerk 203 über die Kommunikationsschnittstelle 105 ausgelesen werden.

Der Speicher 101 des Zertifikats-Tokens 100 kann ausgebildet sein, ein Wurzelzertifikat, insbesondere ein CVCA-Zertifikat, zu speichern, wobei das Übertragen des signierten Personendatums und des öffentlichen Zertifikatsschlüssels zu dem elektronischen Zertifizierungsdienst 201 ein Verifizieren einer Authentizität des elektronischen Zertifizierungsdienstes 201 unter Verwendung des Wurzelzertifikats, insbesondere des CVCA-Zertifikats, durch den Prozessor 103 des Zertifikats-Tokens 100 umfasst. Das signierte Personendatum und der öffentliche Zertifikatsschlüssel können zu dem elektronischen Zertifizierungsdienst 201 über das Kommunikationsnetzwerk 203 übertragen werden.

Das signierte Personendatum des Nutzers kann mit einem privaten Signaturschlüssel eines Identifizierungsdienstes zum Identifizieren des Nutzers signiert sein, wobei das signierte Personendatum durch den elektronischen Zertifizierungsdienst 201 mittels eines öffentlichen Signaturprüfschlüssels des Identifizierungsdienstes verifiziert werden kann. Der private Signaturschlüssel des Identifizierungsdienstes und der öffentliche Signaturprüfschlüssel des Identifizierungsdienstes können dabei ein kryptographisches Schlüsselpaar bilden. Das digitale Zertifikat des Nutzers kann bei erfolgreicher Verifizierung des signierten Personendatums durch den elektronischen Zertifizierungsdienst 201 auf Basis des signierten Personendatums und des öffentlichen Zertifikatsschlüssels erzeugt werden.

Das digitale Zertifikat des Nutzers kann anschließend durch den elektronischen Zertifizierungsdienst 201 an das Zertifikats-Token 100 über das Kommunikationsnetzwerk 203 ausgesendet werden. Das digitale Zertifikat des Nutzers kann in dem Speicher 101 des Zertifikats-Tokens 100 gespeichert werden.

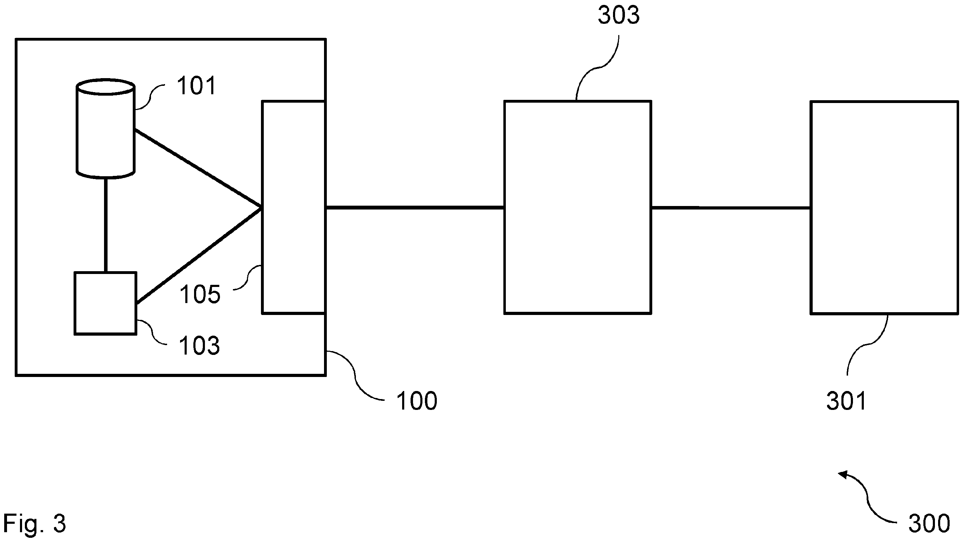

Fig. 3 zeigt ein schematisches Diagramm eines Systems 300 zum Herstellen eines Zertifikats-Tokens 100 eines Nutzers. Das System 300 umfasst das Zertifikats-Token 100, einen Identifizierungsdienst 301, und ein Produktionssystem 303. Das Zertifikats-Token 100 umfasst einen Speicher 101, einen Prozessor 103 und eine Kommunikationsschnittstelle 105.

Der Identifizierungsdienst 301 kann beispielsweise eine Registrierungsstelle (Registration Authority, RA) sein. Das Produktionssystem 303 kann zur erstmaligen Personalisierung des Zertifikats-Tokens 100 des Nutzers vorgesehen sein.

Das Zertifikats-Token 100 des Nutzers kann unter Verwendung des Identifizierungsdienstes 301 und des Produktionssystems 303 hergestellt werden, wobei dem Nutzer ein Personendatum zugeordnet sein kann. Das Herstellen des Zertifikats-Tokens 100 des Nutzers kann folgendermaßen realisiert werden.

Der Nutzer kann durch den Identifizierungsdienst 301 identifiziert werden, um das Personendatum zu erfassen und dem Nutzer zuzuordnen. Das Personendatum des Nutzers kann durch den Identifizierungsdienst 301 mit einem privaten Signaturschlüssel des Identifizierungsdienstes 301 signiert werden, um ein signiertes Personendatum des Nutzers zu erhalten.

Das signierte Personendatum des Nutzers kann schließlich in dem Speicher 101 des Zertifikats-Tokens 100 durch das Produktionssystem 303 gespeichert werden, um das Zertifikats-Token 100 herzustellen. Ferner kann durch das Produktionssystem 303 ein Wurzelzertifikat, insbesondere ein CVCA-Zertifikat, bereitgestellt werden, und in dem Speicher 101 des Zertifikats-Tokens 100 gespeichert werden.

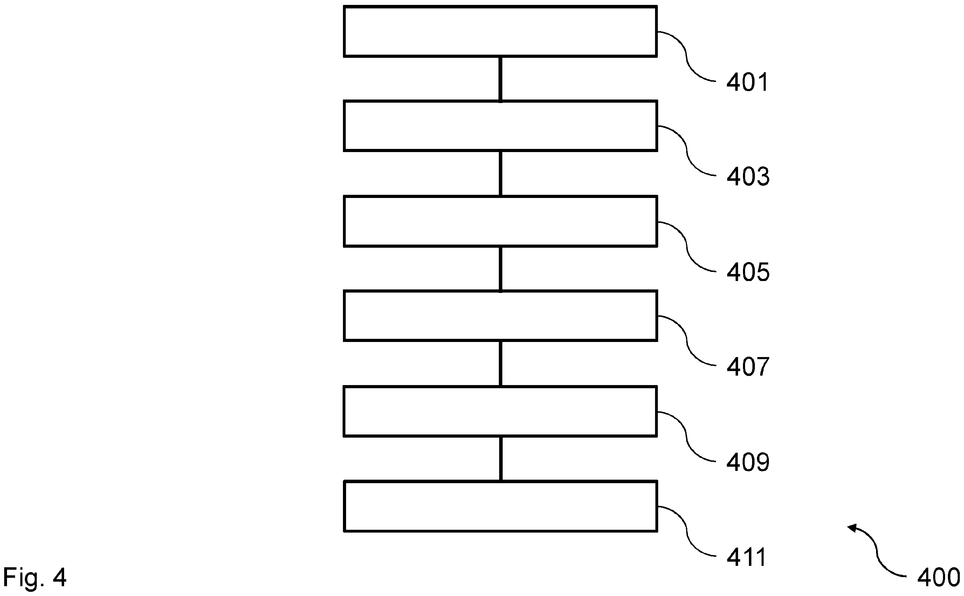

Fig. 4 zeigt ein schematisches Diagramm eines Verfahrens 400 zum Bereitstellen eines digitalen Zertifikats eines Nutzers. Das Verfahren 400 wird unter Verwendung eines Zertifikats-Tokens und eines elektronischen Zertifizierungsdienstes durchgeführt, wobei das Zertifikats-Token einen Speicher, einen Prozessor und eine Kommunikationsschnittstelle umfasst, wobei der Speicher ausgebildet ist, ein signiertes Personendatum des Nutzers und das digitale Zertifikat des Nutzers zu speichern, wobei der Prozessor ausgebildet ist, einen öffentlichen Zertifikatsschlüssel des digitalen Zertifikats zu erzeugen, wobei die Kommunikationsschnittstelle ausgebildet ist, das signierte Personendatum und den öffentlichen Zertifikatsschlüssel für eine Übermittlung über ein Kommunikationsnetzwerk an den elektronischen Zertifizierungsdienst bereitzustellen, und, ansprechend auf die Bereitstellung des signierten Personendatums und des öffentlichen Zertifikatsschlüssels, das digitale Zertifikat des Nutzers von dem elektronischen Zertifizierungsdienst zu empfangen, um das digitale Zertifikat bereitzustellen.

Das Verfahren 400 umfasst die folgenden Schritte eines Bereitstellens 401 des signierten Personendatums und des öffentlichen Zertifikatsschlüssels durch die Kommunikationsschnittstelle des Zertifikats-Tokens, eines Übertragens 403 des signierten Personendatums und des öffentlichen Zertifikatsschlüssels zu dem elektronischen Zertifizierungsdienst über das Kommunikationsnetzwerk, eines Verifizierens 405 des signierten Personendatums durch den elektronischen Zertifizierungsdienst, eines Erzeugens 407 des digitalen Zertifikats des Nutzers durch den elektronischen Zertifizierungsdienst auf Basis des signierten Personendatums und des öffentlichen Zertifikatsschlüssels, eines Aussendens 409 des digitalen Zertifikats des Nutzers durch den elektronischen Zertifizierungsdienst an das Zertifikats-Token, und eines Speicherns 411 des digitalen Zertifikats des Nutzers in dem Speicher des Zertifikats-Tokens.

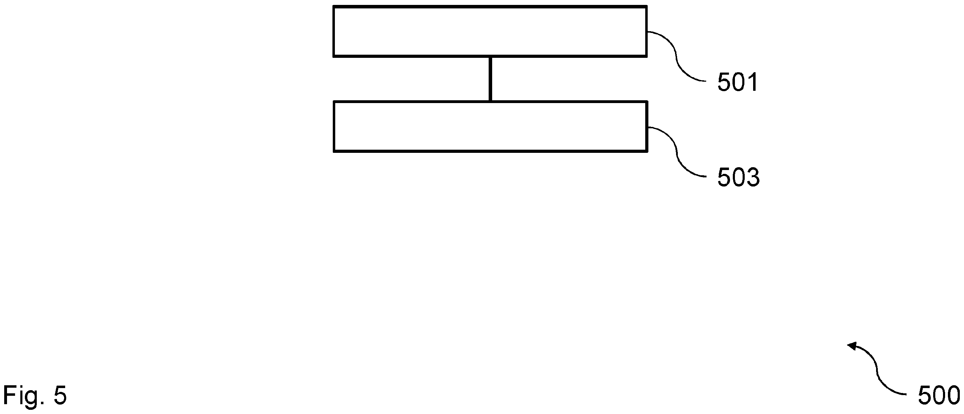

Fig. 5 zeigt ein schematisches Diagramm eines Verfahrens 500 zum Herstellen eines Zertifikats-Tokens eines Nutzers. Das Verfahren 500 wird unter Verwendung eines Identifizierungsdienstes und eines Produktionssystems durchgeführt, wobei dem Nutzer ein Personendatum zugeordnet ist. Das Zertifikats-Token umfasst einen Speicher, einen Prozessor und eine Kommunikationsschnittstelle, wobei der Speicher ausgebildet ist, ein signiertes Personendatum des Nutzers und ein digitales Zertifikat des Nutzers zu speichern, wobei der Prozessor ausgebildet ist, einen öffentlichen Zertifikatsschlüssel des digitalen Zertifikats zu erzeugen, wobei die Kommunikationsschnittstelle ausgebildet ist, das signierte Personendatum und den öffentlichen Zertifikatsschlüssel für eine Übermittlung über ein Kommunikationsnetzwerk an einen elektronischen Zertifizierungsdienst bereitzustellen, und, ansprechend auf die Bereitstellung des signierten Personendatums und des öffentlichen Zertifikatsschlüssels, das digitale Zertifikat des Nutzers von dem elektronischen Zertifizierungsdienst zu empfangen, um das digitale Zertifikat bereitzustellen.

Das Verfahren 500 umfasst die folgenden Schritte eines Signierens 501 des Personendatums des Nutzers durch den Identifizierungsdienst mit einem privaten Signaturschlüssel des Identifizierungsdienstes, um das signierte Personendatum des Nutzers zu erhalten, und eines Speicherns 503 des signierten Personendatums des Nutzers in dem Speicher des Zertifikats-Tokens durch das Produktionssystem, um das Zertifikats-Token herzustellen.

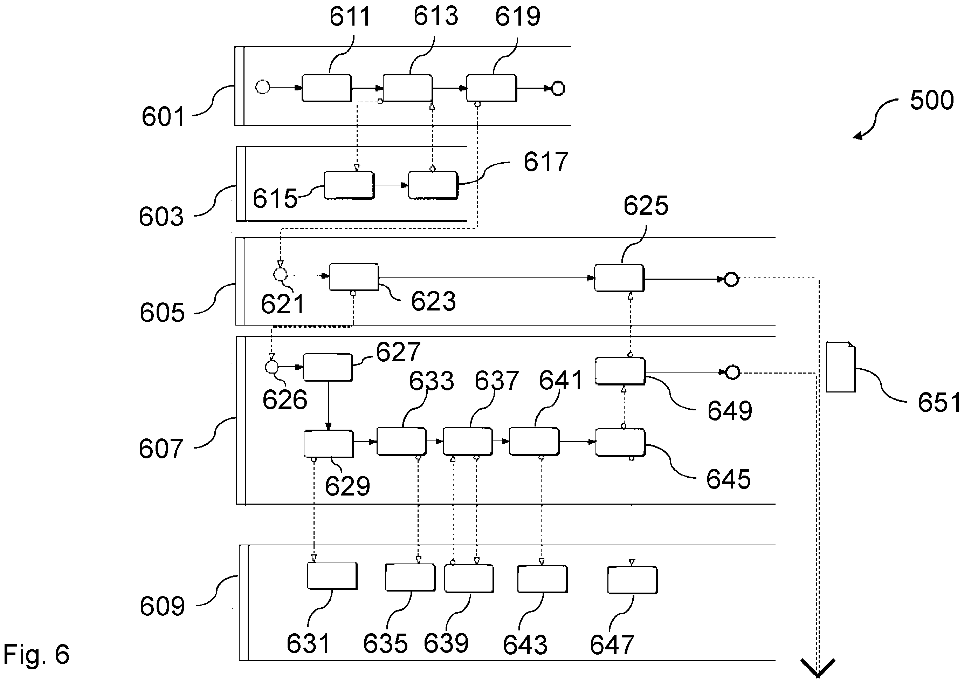

Fig. 6 zeigt ein schematisches Diagramm eines Verfahrens 500 zum Herstellen eines Zertifikats-Tokens eines Nutzers. Das Diagramm umfasst eine Erfassungseinrichtung 601, welche eine Erfassungssoftware sein kann, einen RA-Client 603, eine Personalisierungsmanagementeinrichtung 605, eine Personalisierungseinrichtung 607, welche eine Personalisierungsmaschine oder eine Personalisierungssoftware sein kann, ein Zertifikats-Token 609, welches nicht ausgegeben sein kann, und Verfahrensschritte 611-651.

Die Erfassungseinrichtung 601 und der RA-Client 603 bilden den Identifizierungsdienst 301. Die Personalisierungsmanagementeinrichtung 605 und die Personalisierungseinrichtung 607 bilden das Produktionssystem 303. Das Zertifikats-Token 609 bildet eine Realisierung des Zertifikats-Tokens 100.

Die Verfahrensschritte 611-651 bilden das Verfahren 500 zum Herstellen eines Zertifikats-Tokens eines Nutzers. In Verfahrensschritt 611 werden Personendaten erfasst, in Verfahrensschritt 613 werden die Personendaten signiert, in Verfahrensschritt 615 wird ein authentischer Zeitstempel eingebracht, in Verfahrensschritt 617 wird eine Signatur mittels einer Karte eines RA-Bediensteten erstellt, und in Verfahrensschritt 619 wird der Antrag abgeschlossen. In Verfahrensschritt 621 werden die signierten Personendaten erhalten, in Verfahrensschritt 623 wird ein Produktionsauftrag erzeugt und gesendet, und in Verfahrensschritt 625 wird ein PIN/PUK Druck durchgeführt.

In Verfahrensschritt 626 wird der Produktionsauftrag erhalten, in Verfahrensschritt 627 wird das Zertifikats-Token personalisiert, in Verfahrensschritt 629 werden die signierten Personendaten geschrieben, und in Verfahrensschritt 631 werden die signierten Personendaten gespeichert. In Verfahrensschritt 633 wird ein Wurzelzertifikat, beispielsweise ein CVCA-Zertifikat, geschrieben, und in Verfahrensschritt 635 wird das Wurzelzertifikat, beispielsweise das CVCA-Zertifikat, gespeichert. In Verfahrensschritt 637 wird ein CA-Schlüssel erzeugt, in Verfahrensschritt 639 wird ein CA-Schlüssel generiert, in Verfahrensschritt 641 wird der CA-Schlüssel unterschrieben, und in Verfahrensschritt 643 wird ein EF.CardSecurity-Datensatz gespeichert. In Verfahrensschritt 645 wird ein Ausgangsdatenartefakt mit einer Transport-PIN/-PUK erzeugt, in Verfahrensschritt 647 wird die PIN/PUK in einem deaktivierten Zustand gespeichert, und in Verfahrensschritt 649 wird der Ausgangsdatenartefakt zurückgegeben. In Verfahrensschritt 651 erhält der Nutzer das Zertifikats-Token und einen PIN-Brief.

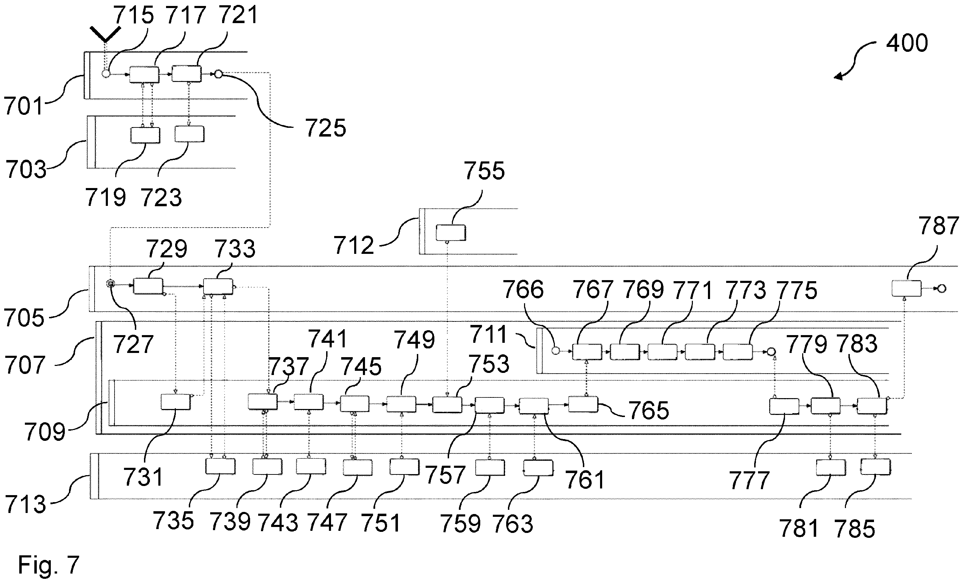

Fig. 7 zeigt ein schematisches Diagramm eines Verfahrens 400 zum Bereitstellen eines digitalen Zertifikats eines Nutzers. Das Diagramm setzt das Diagramm aus Fig. 6 unmittelbar fort. Das Diagramm umfasst eine Middleware 701 zum Aktivieren der PIN, ein Zertifikats-Token 703, welches ausgegeben und deaktiviert sein kann, eine Middleware 705 zum Nachladen eines digitalen Zertifikats, eine Sign-Me Einrichtung 707, eine elD-Service Einrichtung 709, ein Trustcenter 711, welches eine Certificate Authority (CA) sein kann, eine RA-Authority 712, ein Zertifikats-Token 713, welches ausgegeben und aktiviert sein kann, und Verfahrensschritte 715-787.

Die Sign-Me Einrichtung 707, die eID-Service Einrichtung 709, das Trustcenter 711 und die RA-Authority 712 bilden den elektronischen Zertifizierungsdienst 201. Die Middleware 701 und die Middleware 705 sind dem elektronischen Zertifizierungsdienst 201 und/oder dem Zertifikats-Token 100 zugeordnet. Das Zertifikats-Token 703 und das Zertifikats-Token 713 bilden Realisierungen des Zertifikats-Tokens 100.

Die Verfahrensschritte 715-787 bilden das Verfahren 400 zum Bereitstellen eines digitalen Zertifikats eines Nutzers. In Verfahrensschritt 715 wird die PIN aktiviert, in Verfahrensschritt 717 wird ein PACE Protokoll mit der Transport-PIN durchgeführt, in Verfahrensschritt 719 wird das PACE Protokoll mit der Transport-PIN durchgeführt, in Verfahrensschritt 721 wird eine Aktivierung der PIN durchgeführt, in Verfahrensschritt 723 wird die PIN in einem aktivierten Zustand gespeichert, und in Verfahrensschritt 725 wird die PIN aktiviert. In Verfahrensschritt 727 werden digitale Zertifikate und/oder Schlüssel nachgeladen, in Verfahrensschritt 729 wird ein Nachlade-Client aktiviert, in Verfahrensschritt 731 wird ein Nachlade-Prozess initiiert, in Verfahrensschritt 733 wird ein PACE Protokoll mit der PIN durchgeführt, und in Verfahrensschritt 735 wird das PACE Protokoll mit der PIN durchgeführt.

In Verfahrensschritt 737 wird ein Terminal Authentication (TA) Protokoll durchgeführt, in Verfahrensschritt 739 wird das Terminal Authentication (TA) Protokoll durchgeführt, in Verfahrensschritt 741 wird ein Passive Authentication Protokoll durchgeführt, in Verfahrensschritt 743 wird ein EF.CardSecurity Datensatz ausgelesen, in Verfahrensschritt 745 wird ein Chip Authentication (CA) Protokoll durchgeführt, und in Verfahrensschritt 747 wird das Chip Authentication (CA) Protokoll durchgeführt.

In Verfahrensschritt 749 wird eine Signatur und Rolle eines RA-Bediensteten geprüft, in Verfahrensschritt 751 werden die signierten Personendaten ausgelesen, in Verfahrensschritt 753 wird der Zeitstemple der signierten Personendaten mittels einer RA-Sperrliste geprüft, und in Verfahrensschritt 755 erfolgt ein Abgleich mit der RA-Sperrliste. In Verfahrensschritt 757 wird ein öffentlicher Signaturschlüssel erhalten, welcher in Verfahrensschritt 759 generiert wird. In Verfahrensschritt 761 wird ein öffentlicher Authentisierungsschlüssel erhalten, welcher in Verfahrensschritt 763 generiert wird.

In Verfahrensschritt 765 werden digitale Zertifikate und Verschlüsselungsschlüssel angefordert. In Verfahrensschritt 766 werden die Zertifikatsanfragen erhalten, in Verfahrensschritt 767 wird ein Signaturzertifikat erzeugt, in Verfahrensschritt 769 wird ein Authentifizierungszertifikat erzeugt, in Verfahrensschritt 771 wird ein Verschlüsselungsschlüsselpaar erzeugt, in Verfahrensschritt 773 wird ein Verschlüsselungszertifikat erzeugt, und in Verfahrensschritt 775 erfolgt ein Einbringen der digitalen Zertifikate.

In Verfahrensschritt 777 werden die digitalen Zertifikate und Verschlüsselungsschlüssel erhalten, in Verfahrensschritt 779 werden die Verschlüsselungsschlüssel geschrieben, in Verfahrensschritt 781 werden die Verschlüsselungsschlüssel gespeichert, in Verfahrensschritt 783 werden die digitalen Zertifikate für Signatur und Authentisierung gesendet, in Verfahrensschritt 785 werden die digitalen Zertifikate für Signatur und Authentisierung gespeichert, und in Verfahrensschritt 787 wird eine Bestätigung über den Erfolg des Nachladeprozesses bereitgestellt.

Im Folgenden werden weitere Ausführungsbeispiele des Zertifikats-Tokens 100, des Verfahrens 400 zum Bereitstellen eines digitalen Zertifikats eines Nutzers, und des Verfahrens 500 zum Herstellen eines Zertifikats-Tokens eines Nutzers erläutert.

Die Erfindung kann zur dezentralen Beantragung von fortgeschrittenen und/oder qualifizierten digitalen Zertifikaten eingesetzt werden. Für die Bereitstellung oder Ausstellung von digitalen Zertifikaten kann der Nutzer oder Antragsteller mit seinen Personendaten identifiziert werden. Dieser Prozess, welcher auch als Registrierung bezeichnet wird, kann anhand papiergebundener Antragsunterlagen mit persönlicher Identifizierung des Nutzers bei einem Zertifizierungsdienst oder Zertifizierungsdiensteanbieter (ZDA), oder durch einen anderen Berechtigten erfolgen, beispielsweise mittels eines Post-basierten Identifikationsverfahrens, oder unter Verwendung einer eID-Funktion eines Identifikationsdokumentes, beispielsweise eines neuen Personalausweises (nPA), womit eine persönliche Identifizierung ersetzt werden kann. Dabei können die Personendaten oder Daten zur Verarbeitung durch den Zertifizierungsdienst oder Zertifizierungsdiensteanbieter elektronisch aufgenommen und gespeichert werden.

Werden die Personendaten nicht durch den Zertifizierungsdienst oder Zertifizierungsdiensteanbieter erfasst, sondern durch eine berechtigte dritte Stelle, so können die Personendaten zur Produktionsvorbereitung an den Zertifizierungsdienst oder Zertifizierungsdiensteanbieter übermittelt werden. Bei der Übermittlung der Personendaten kann gewährleistet werden, dass die Personendaten nicht verfälscht oder manipuliert werden.

Zum Zeitpunkt der Produktion der digitalen Zertifikate für den Nutzer oder Antragsteller durch den elektronischen Zertifizierungsdienst oder Zertifizierungsdiensteanbieter können die Personendaten beim elektronischen Zertifizierungsdienst oder Zertifizierungsdiensteanbieter vorliegen und/oder als Teil einer Zertifikatsanfrage übermittelt werden. Dabei können die Personendaten bereits zum Zeitpunkt der elektronischen Personalisierung auf das Zertifikats-Token oder die Karte aufgebracht werden. Für ein Nachladen von digitalen Zertifikaten zu einem späteren Zeitpunkt können Verfahren eingesetzt werden, um die Personendaten zur Zertifikatsproduktion dann bereitzustellen, wenn das digitale Zertifikat produziert wird.

Zur Identifikation des Nutzers für ein Nachladeverfahren kann eine eID-Funktion eines Identifikationsdokumentes, beispielsweise eines neuen Personalausweises (nPA), verwendet werden. Ferner können Verfahren eingesetzt werden, um digitale Zertifikate auf Zertifikats-Token oder Chipkarten nachzuladen. Die Authentizität eines Zertifikats-Tokens oder der Karte kann beispielsweise unter Verwendung von Transportzertifikaten oder Gütesiegeln, oder unter Verwendung von Public-Key-Infrastruktur (PKI) basierter Authentisierung, beispielsweise mittels Secure Messaging oder mittels eines Einbringens von Vertrauensankern, geprüft werden.

Die zur Produktion von digitalen Zertifikaten verwendeten Personendaten und/oder kryptographischen Schlüssel brauchen bis zum Produktionszeitpunkt auch nicht an den elektronischen Zertifizierungsdienst oder Zertifizierungsdiensteanbieter weitergeleitet werden. Das bedeutet, dass die Personendaten und/oder kryptographischen Schlüssel manipulationsgeschützt aufbewahrt und erst zum Zeitpunkt der Zertifikatsproduktion an den elektronischen Zertifizierungsdienst oder Zertifizierungsdiensteanbieter gesendet werden. Das Speichern oder Aufbringen der digitalen Zertifikate auf das Zertifikats-Token kann durch den Nutzer selbst im Feld erfolgen. Dazu kann der Nutzer oder Anwender in die Lage versetzt werden, dem elektronischen Zertifizierungsdienst oder Zertifizierungsdiensteanbieter die Personendaten und/oder kryptographischen Schlüssel weiterzuleiten.

Dazu kann eine Vorgehensweise eingesetzt werden, die es ermöglicht, bereits erfasste Personendaten oder Identifikationsdaten derart aufzubereiten und zu speichern, dass die Personendaten oder Identifikationsdaten erst zum Produktionszeitpunkt an den elektronischen Zertifizierungsdienst oder Zertifizierungsdiensteanbieter geleitet werden und trotzdem eine Zuordnung von Nutzer oder Antragsteller zum verwendeten Zertifikats-Token möglich ist. Gemäß einer Ausführungsform werden die Personendaten nicht in einem digitalen Zertifikat gespeichert. Gemäß einer Ausführungsform werden die Personendaten von einer vertrauenswürdigen Instanz, beispielsweise einem Identifizierungsdienst, signiert.

Die Vorgehensweise, wie das Zertifikats-Token in den Besitz des Nutzers oder Antragstellers gelangt und später mit digitalen Zertifikaten versehen wird, ist wie folgt. Der Nutzer oder Antragsteller wird beispielsweise von Identifikationsmitarbeitern eines Identifizierungsdienstes oder einer Registrierungsstelle identifiziert, beispielsweise durch Vorlage eines Identifikationsdokumentes oder Ausweises, durch die Verwendung einer eID-Funktion eines Identifikationsdokumentes, beispielsweise eines elektronischen neuen Personalausweises (nPA), durch die Verwendung eines Post-basierten Identifikationsverfahrens, oder eines gleichartigen Verfahrens.

Die dabei erhobenen Personendaten oder Identifikationsdaten können gegen Manipulation geschützt werden. Dieses kann in elektronisch signierter Form erfolgen. Es können eine oder mehrere Signaturen verwendet werden. Die Signatur kann von Mitarbeitern, beispielsweise von Identifizierungsmitarbeitern, geleistet werden oder von technischen Komponenten, beispielsweise Maschinen- oder Stapelsignaturen. Die Personendaten können optional mit einem Zeitstempel versehen werden. Mögliche Datenformate sind beispielsweise signierte XML-Dateien oder Dateien im CMS Format (Cryptographic Message Syntax) oder im PKCS#7 Format.

Diese signierten Personendaten werden zum Zeitpunkt, zu dem das Zertifikats-Token produziert wird, vom Produktionssystem in das Zertifikats-Token selbst eingebracht. Optional kann, im Falle von Hardware-Zertifikats-Token, eine eindeutige Identifikationskennung des Hardware-Zertifikats-Tokens, beispielsweise eine Chipseriennummer oder ICCSN, zugeordnet werden. Weitere produktionsrelevante Daten können ebenfalls aufgenommen werden. Die manipulationsgeschützte Zuordnung erfolgt durch kryptographische Verfahren, beispielsweise eine elektronische Signatur.

Dem Nutzer oder Besitzer kann das Zertifikats-Token ausgehändigt werden. Dabei kann mindestens ein digitales End-Entity-Zertifikat noch nicht auf dem Zertifikats-Token enthalten sein. Dieses kann durch den Nutzer oder Besitzer zu einem späteren Zeitpunkt auf das Zertifikats-Token nachgeladen werden.

Der Nutzer oder Besitzer möchte nun ein digitales Zertifikat zu einem auf dem Zertifikats-Token befindlichen kryptographischen Schlüssel erstellen. Dazu werden die signierten Personendaten, der kryptographische Schlüssel, und gegebenenfalls alle dort referenzierten Daten aus dem Zertifikats-Token ausgelesen und an den elektronischen Zertifizierungsdienst oder Zertifizierungsdiensteanbieter übermittelt. Der Nutzer oder Anwender kann bei diesem Vorgang durch entsprechende Computerprogramme unterstützt werden.

Der elektronische Zertifizierungsdienst oder Zertifizierungsdiensteanbieter erstellt das digitale Zertifikat oder die digitalen Zertifikate und übermittelt diese zurück an den Nutzer oder Anwender. Die digitalen Zertifikate werden in das Zertifikats-Token eingebracht.

Das Verfahren kann für ein oder mehrere digitale Zertifikate genutzt werden. Im Falle mehrerer digitaler Zertifikate kann auch die erfolgte Zuordnung von Personendaten oder Identifikationsdaten zum Zertifikats-Token und/oder zum öffentlichen Schlüssel referenziert werden, um die Personendaten oder Identifikationsdaten nicht komplett erneut zuzuordnen. Die Kommunikation mit dem Zertifikats-Token kann durch kryptographische Verfahren, wie beispielsweise einem Password Authenticated Connection Establishment (PACE) Protokoll, einem Terminal Authentication (TA) Protokoll, einem Chip Authentication (CA) Protokoll oder einem Secure Messaging (SM) Protokoll, geschützt erfolgen.

Dadurch können mehrere Vorteile erreicht werden. Fortgeschrittene und qualifizierte digitale Zertifikate können dezentral bereitgestellt oder beantragt werden ohne einen erneuten Identitätsnachweis des Nutzers durchzuführen, da der elektronische Zertifizierungsdienst oder das Trustcenter die Signatur der Personendaten oder RA-Daten, und/oder der Produktionsdaten, mit gegebenenfalls dort referenzierten Daten, überprüfen kann und somit die Zugehörigkeit der Personendaten zu dem Zertifikats-Token und zu dem digitalen Zertifikat gewährleistet werden kann.

Zudem erhält der elektronische Zertifizierungsdienst oder Zertifizierungsdiensteanbieter erst zum Zeitpunkt der Produktion des digitalen Zertifikats von den Personendaten oder Identifikationsdaten Kenntnis. Die Personendaten oder Identifikationsdaten verbleiben bis dahin unter Kontrolle des Identifizierungsdienstes, der identifizierenden Stelle, und/oder des Nutzers oder Inhabers des Zertifikats-Tokens.

Darüber hinaus transportiert der Identifizierungsdienst oder die identifizierende Stelle keine weiteren Daten zum elektronischen Zertifizierungsdienst oder Zertifizierungsdiensteanbieter und hält auch keine Personendaten oder Identifikationsdaten über längere Zeit vor. Der Identifizierungsdienst oder die identifizierende Stelle speichert somit keine Personendaten oder Identifikationsdaten.

Zudem können einmal erhobene Personendaten, Identifikationsdaten oder Registrierungsdaten je nach Nachlade-Dienstleister von verschiedenen elektronischen Zertifizierungsdiensten oder Zertifizierungsdiensteanbietern genutzt werden. Dem Nutzer oder Antragsteller steht es dabei frei, sich zum Nachladezeitpunkt an einen elektronischen Zertifizierungsdienst oder Zertifizierungsdiensteanbieter seiner Wahl zu wenden.

### BEZUGSZEICHENLISTE

- 100: Zertifikats-Token zum Bereitstellen eines digitalen Zertifikats eines Nutzers
- 101: Speicher
- 103: Prozessor
- 105: Kommunikationsschnittstelle

- 200: System zum Bereitstellen eines digitalen Zertifikats eines Nutzers
- 201: Elektronischer Zertifizierungsdienst
- 203: Kommunikationsnetzwerk

- 300: System zum Herstellen eines Zertifikats-Tokens eines Nutzers
- 301: Identifizierungsdienst
- 303: Produktionssystem

- 400: Verfahren zum Bereitstellen eines digitalen Zertifikats eines Nutzers
- 401: Bereitstellen des signierten Personendatums und des öffentlichen Zertifikatsschlüssels
- 403: Übertragen des signierten Personendatums und des öffentlichen Zertifikatsschlüssels
- 405: Verifizieren des signierten Personendatums
- 407: Erzeugen des digitalen Zertifikats des Nutzers
- 409: Aussenden des digitalen Zertifikats des Nutzers
- 411: Speichern des digitalen Zertifikats des Nutzers

- 500: Verfahren zum Herstellen eines Zertifikats-Tokens eines Nutzers
- 501: Signieren des Personendatums des Nutzers
- 503: Speichern des signierten Personendatums des Nutzers

- 601: Erfassungseinrichtung
- 603: RA-Client
- 605: Personalisierungsmanagementeinrichtung
- 607: Personalisierungseinrichtung
- 609: Zertifikats-Token
- 611-651: Verfahrensschritte
- 701: Middleware
- 703: Zertifikats-Token
- 705: Middleware
- 707: Sign-Me Einrichtung
- 709: eID-Service Einrichtung
- 711: Trustcenter
- 712: RA-Authority
- 713: Zertifikats-Token
- 715-787: Verfahrensschritte

## Patentansprüche

1. Zertifikats-Token (100) zum Bereitstellen eines digitalen Zertifikats eines Nutzers, mit:
einem Speicher (101), welcher ausgebildet ist, ein Wurzelzertifikat, ein signiertes Personendatum des Nutzers und das digitale Zertifikat des Nutzers zu speichern;
einem Prozessor (103), welcher ausgebildet ist, einen öffentlichen Zertifikatsschlüssel des digitalen Zertifikats zu erzeugen, und eine Authentizität eines elektronischen Zertifizierungsdienstes (201) unter Verwendung des Wurzelzertifikats zu verifizieren; und
einer Kommunikationsschnittstelle (105), welche ausgebildet ist, das signierte Personendatum und den öffentlichen Zertifikatsschlüssel für eine Übermittlung über ein Kommunikationsnetzwerk (203) an den elektronischen Zertifizierungsdienst (201) bereitzustellen, zwischen dem Zertifikats-Token (100) und dem elektronischen Zertifizierungsdienst (201) eine authentifizierte Kommunikationsverbindung unter Verwendung eines Password Authenticated Connection Establishment, PACE, Protokolls aufzubauen, das signierte Personendatum und den öffentliche Zertifikatsschlüssel über die authentifizierte Kommunikationsverbindung von dem Zertifikats-Token (100) zu dem elektronischen Zertifizierungsdienst (201) zu übertragen, und, ansprechend auf die Bereitstellung des signierten Personendatums und des öffentlichen Zertifikatsschlüssels, das digitale Zertifikat des Nutzers über die authentifizierte Kommunikationsverbindung von dem elektronischen Zertifizierungsdienst (201) zu empfangen, um das digitale Zertifikat bereitzustellen.

2. Zertifikats-Token (100) nach Anspruch 1, wobei das signierte Personendatum des Nutzers mit einem privaten Signaturschlüssel eines Identifizierungsdienstes (301) zum Identifizieren des Nutzers signiert ist.

3. Zertifikats-Token (100) nach einem der vorstehenden Ansprüche, wobei das signierte Personendatum einen Zeitstempel umfasst, und wobei der Zeitstempel einen Zeitpunkt einer Erzeugung des signierten Personendatums anzeigt.

4. Zertifikats-Token (100) nach einem der vorstehenden Ansprüche, wobei das Wurzelzertifikat ein CVCA-Zertifikat ist.

5. Zertifikats-Token (100) nach einem der vorstehenden Ansprüche, wobei der Prozessor (103) ausgebildet ist, einen privaten Zertifikatsschlüssel des digitalen Zertifikats zu erzeugen, und wobei der private Zertifikatsschlüssel und der öffentliche Zertifikatsschlüssel ein kryptographisches Schlüsselpaar bilden.

6. Zertifikats-Token (100) nach einem der vorstehenden Ansprüche, wobei das digitale Zertifikat ein Signaturzertifikat zur Signierung von Daten des Nutzers, oder ein Authentifizierungszertifikat zur Authentifizierung des Nutzers ist.

7. Verfahren (400) zum Bereitstellen eines digitalen Zertifikats eines Nutzers unter Verwendung eines Zertifikats-Tokens (100) und eines elektronischen Zertifizierungsdienstes (201), wobei das Zertifikats-Token (100) einen Speicher (101), einen Prozessor (103) und eine Kommunikationsschnittstelle (105) umfasst, wobei der Speicher (101) ausgebildet ist, ein Wurzelzertifikat, ein signiertes Personendatum des Nutzers und das digitale Zertifikat des Nutzers zu speichern, wobei der Prozessor (103) ausgebildet ist, einen öffentlichen Zertifikatsschlüssel des digitalen Zertifikats zu erzeugen, wobei die Kommunikationsschnittstelle (105) ausgebildet ist, das signierte Personendatum und den öffentlichen Zertifikatsschlüssel für eine Übermittlung über ein Kommunikationsnetzwerk (203) an den elektronischen Zertifizierungsdienst (201) bereitzustellen, und, ansprechend auf die Bereitstellung des signierten Personendatums und des öffentlichen Zertifikatsschlüssels, das digitale Zertifikat des Nutzers von dem elektronischen Zertifizierungsdienst (201) zu empfangen, um das digitale Zertifikat bereitzustellen, und wobei das Verfahren (400) die folgenden Schritte umfasst:
Bereitstellen (401) des signierten Personendatums und des öffentlichen Zertifikatsschlüssels durch die Kommunikationsschnittstelle (105) des Zertifikats-Tokens (100);
Aufbauen einer authentifizierten Kommunikationsverbindung zwischen dem Zertifikats-Token (100) und dem elektronischen Zertifizierungsdienst (201) unter Verwendung eines Password Authenticated Connection Establishment, PACE, Protokolls;
Übertragen (403) des signierten Personendatums und des öffentlichen Zertifikatsschlüssels über die authentifizierte Kommunikationsverbindung von dem Zertifikats-Token (100) zu dem elektronischen Zertifizierungsdienst (201) über das Kommunikationsnetzwerk (203), wobei das Übertragen (403) des signierten Personendatums und des öffentlichen Zertifikatsschlüssels zu dem elektronischen Zertifizierungsdienst (201) ein Verifizieren einer Authentizität des elektronischen Zertifizierungsdienstes (201) unter Verwendung des Wurzelzertifikats durch den Prozessor (103) des Zertifikats-Tokens (100) umfasst;
Verifizieren (405) des signierten Personendatums durch den elektronischen Zertifizierungsdienst (201);
Erzeugen (407) des digitalen Zertifikats des Nutzers durch den elektronischen Zertifizierungsdienst (201) auf Basis des signierten Personendatums und des öffentlichen Zertifikatsschlüssels;
Aussenden (409) des digitalen Zertifikats des Nutzers über die authentifizierte Kommunikationsverbindung durch den elektronischen Zertifizierungsdienst (201) an das Zertifikats-Token (100); und
Speichern (411) des digitalen Zertifikats des Nutzers in dem Speicher (101) des Zertifikats-Tokens (100).

8. Verfahren (400) nach Anspruch 7, wobei das signierte Personendatum und der öffentliche Zertifikatsschlüssel im Schritt des Bereitstellens (401) an den elektronischen Zertifizierungsdienst (201) über das Kommunikationsnetzwerk (203) durch die Kommunikationsschnittstelle (105) ausgesendet werden, oder wobei das signierte Personendatum und der öffentliche Zertifikatsschlüssel im Schritt des Bereitstellens (401) durch den elektronischen Zertifizierungsdienst (201) über das Kommunikationsnetzwerk (203) über die Kommunikationsschnittstelle (105) ausgelesen werden.

9. Verfahren (400) nach Anspruch 7 oder 8, wobei das signierte Personendatum des Nutzers mit einem privaten Signaturschlüssel eines Identifizierungsdienstes (301) zum Identifizieren des Nutzers signiert ist, wobei das Verifizieren (405) des signierten Personendatums durch den elektronischen Zertifizierungsdienst (201) mittels eines öffentlichen Signaturprüfschlüssels des Identifizierungsdienstes (301) durchgeführt wird, und wobei der private Signaturschlüssel des Identifizierungsdienstes (301) und der öffentliche Signaturprüfschlüssel des Identifizierungsdienstes (301) ein kryptographisches Schlüsselpaar bilden.

10. Verfahren (400) nach Anspruch 7 bis 9, wobei das Verifizieren (405) des signierten Personendatums durch den elektronischen Zertifizierungsdienst (201) ein Extrahieren eines Personendatums des Nutzers aus dem signierten Personendatum des Nutzers und ein Vergleichen des extrahierten Personendatums des Nutzers mit einer Sperrliste durch den elektronischen Zertifizierungsdienst (201) umfasst, wobei die Sperrliste eine Mehrzahl gesperrter Personendaten umfasst, und wobei das signierte Personendatum nicht verifiziert ist falls die Sperrliste das Personendatum des Nutzers umfasst.

11. Verfahren (400) nach Anspruch 7 bis 10, wobei das signierte Personendatum einen Zeitstempel umfasst, wobei der Zeitstempel einen Zeitpunkt einer Erzeugung des signierten Personendatums anzeigt, wobei das Verifizieren (405) des signierten Personendatums durch den elektronischen Zertifizierungsdienst (201) ein Bestimmen des Zeitpunkts der Erzeugung des signierten Personendatums auf Basis des Zeitstempels und ein Vergleichen des bestimmten Zeitpunktes mit einem Referenzzeitpunkt umfasst, und wobei das signierte Personendatum nicht verifiziert ist falls eine Zeitdifferenz zwischen dem bestimmten Zeitpunkt und dem Referenzzeitpunkt eine vorbestimmte Zeitdifferenz überschreitet.

12. Verfahren (400) nach Anspruch 7 bis 11, wobei das Wurzelzertifikat ein CVCA-Zertifikat ist.

13. Verfahren (500) zum Herstellen eines Zertifikats-Tokens (100) eines Nutzers unter Verwendung eines Identifizierungsdienstes (301) und eines Produktionssystems (303), wobei das Zertifikats-Token (100) einen Speicher (101), einen Prozessor (103) und eine Kommunikationsschnittstelle (105) umfasst, wobei der Speicher (101) ausgebildet ist, ein signiertes Personendatum des Nutzers und ein digitales Zertifikat des Nutzers zu speichern, wobei der Prozessor (103) ausgebildet ist, einen öffentlichen Zertifikatsschlüssel des digitalen Zertifikats zu erzeugen, wobei die Kommunikationsschnittstelle (105) ausgebildet ist, das signierte Personendatum und den öffentlichen Zertifikatsschlüssel für eine Übermittlung über ein Kommunikationsnetzwerk (203) an einen elektronischen Zertifizierungsdienst (201) bereitzustellen, zwischen dem Zertifikats-Token (100) und dem elektronischen Zertifizierungsdienst (201) eine authentifizierte Kommunikationsverbindung unter Verwendung eines Password Authenticated Connection Establishment, PACE, Protokolls aufzubauen, das signierte Personendatum und den öffentliche Zertifikatsschlüssel über die authentifizierte Kommunikationsverbindung von dem Zertifikats-Token (100) zu dem elektronischen Zertifizierungsdienst (201) zu übertragen, und, ansprechend auf die Bereitstellung des signierten Personendatums und des öffentlichen Zertifikatsschlüssels, das digitale Zertifikat des Nutzers über die authentifizierte Kommunikationsverbindung von dem elektronischen Zertifizierungsdienst (201) zu empfangen, um das digitale Zertifikat bereitzustellen, wobei dem Nutzer ein Personendatum zugeordnet ist, und wobei das Verfahren (500) die folgenden Schritte umfasst:
Bereitstellen eines Wurzelzertifikats durch das Produktionssystem (303);
Speichern des Wurzelzertifikats in dem Speicher (101) des Zertifikats-Tokens (100) durch das Produktionssystem (303);
Signieren (501) des Personendatums des Nutzers durch den Identifizierungsdienst (301) mit einem privaten Signaturschlüssel des Identifizierungsdienstes (301), um das signierte Personendatum des Nutzers zu erhalten; und
Speichern (503) des signierten Personendatums des Nutzers in dem Speicher (101) des Zertifikats-Tokens (100) durch das Produktionssystem (303), um das Zertifikats-Token (100) herzustellen.

14. Verfahren (500) nach Anspruch 13, wobei das Wurzelzertifikat ein CVCA-Zertifikat ist.

15. Computerprogramm mit einem Programmcode zum Ausführen des Verfahrens (400) zum Bereitstellen eines digitalen Zertifikats eines Nutzers nach Anspruch 7 bis 12, wenn der Programmcode auf einem Computer ausgeführt wird.

## Claims

1. A certificate token (100) for providing a digital certificate of a user, comprising:
a memory (101), configured to store a root certificate, a signed personal date of the user and the digital certificate of the user;
a processor (103), configured to generate a public certificate key of the digital certificate and to verify an authenticity of an electronic certification service (201) using the root certificate; and
a communication interface (105), configured to provide the signed personal date and the public certificate key for transmission via a communication network (203) to the electronic certification service (201), to establish between the certificate token (100) and the electronic certification service (201) an authenticated communication link using a Password Authenticated Connection Establishment, PACE, protocol, to transmit the signed personal date and the public certificate key via the authenticated communication link from the certificate token (100) to the electronic certification service (201), and, in response to providing the signed personal date and the public certificate key, to receive the digital certificate of the user via the authenticated communication link from the electronic certification service (201) in order to provide the digital certificate.

2. The certificate token (100) according to claim 1, wherein the signed personal date of the user is signed with a private signature key of an identification service (301) for identifying the user.

3. The certificate token (100) according to any one of the preceding claims, wherein the signed personal date comprises a time stamp, and wherein the time stamp indicates a time of generation of the signed personal date.

4. The certificate token (100) according to any one of the preceding claims, wherein the root certificate is a CVCA certificate.

5. The certificate token (100) according to any one of the preceding claims, wherein the processor (103) is configured to generate a private certificate key of the digital certificate, and wherein the private certificate key and the public certificate key form a cryptographic key pair.

6. The certificate token (100) according to any one of the preceding claims, wherein the digital certificate is a signature certificate for signing data of the user, or an authentication certificate for authenticating the user.

7. A method (400) for providing a digital certificate of a user using a certificate token (100) and an electronic certification service (201), wherein the certificate token (100) comprises a memory (101), a processor (103) and a communication interface (105), wherein the memory (101) is configured to store a root certificate, a signed personal date of the user and the digital certificate of the user, wherein the processor (103) is configured to generate a public certificate key of the digital certificate, wherein the communication interface (105) is configured to provide the signed personal date and the public certificate key for transmission via a communication network (203) to the electronic certification service (201), and, in response to the provision of the signed personal date and the public certificate key, to receive the digital certificate of the user from the electronic certification service (201) to provide the digital certificate, and wherein the method (400) comprises the following steps:
providing (401) the signed personal date and the public certificate key by the communication interface (105) of the certificate token (100);
establishing an authenticated communication link between the certificate token (100) and the electronic certification service (201) using a Password Authenticated Connection Establishment, PACE, protocol;
transferring (403) the signed personal date and the public certificate key via the authenticated communication link from the certificate token (100) to the electronic certification service (201) via the communication network (203), wherein transferring (403) the signed personal date and the public certificate key to the electronic certification service (201) comprises verifying an authenticity of the electronic certification service (201) using the root certificate by the processor (103) of the certificate token (100);
verifying (405) the signed personal date by the electronic certification service (201);
generating (407) the digital certificate of the user by the electronic certification service (201) based on the signed personal date and the public certificate key;
sending (409) the digital certificate of the user via the authenticated communication link by the electronic certification service (201) to the certificate token (100); and
storing (411) the digital certificate of the user in the memory (101) of the certificate token (100).

8. The method (400) according to claim 7, wherein the signed personal date and the public certificate key are transmitted to the electronic certification service (201) via the communication network (203) by the communication interface (105) in the step of providing (401), or wherein the signed personal date and the public certificate key are read out by the electronic certification service (201) via the communication network (203) via the communication interface (105) in the step of providing (401).

9. The method (400) according to claim 7 or 8, wherein the signed personal date of the user is signed with a private signature key of an identification service (301) for identifying the user, wherein the verification (405) of the signed personal date is carried out by the electronic certification service (201) by means of a public signature verification key of the identification service (301), and wherein the private signature key of the identification service (301) and the public signature verification key of the identification service (301) form a cryptographic key pair.

10. The method (400) according to any one of claims 7 to 9, wherein the verification (405) of the signed personal date by the electronic certification service (201) comprises an extraction of a personal date of the user from the signed personal date of the user and a comparison of the extracted personal date of the user with a blocked list by the electronic certification service (201), wherein the blocked list comprises a plurality of blocked personal data, and wherein the signed personal date is not verified if the blocked list includes the personal date of the user.

11. The method (400) according to any one of claims 7 to 10, wherein the signed personal date comprises a time stamp, the time stamp indicating a time of generation of the signed personal date, wherein the verification (405) of the signed personal date by the electronic certification service (201) comprises determining of the time of generation of the signed personal date based on the time stamp and a comparison of the determined time with a reference time, and wherein the signed personal date is not verified if a time difference between the determined time and the reference time exceeds a predetermined time difference.

12. The method (400) according to any one of claims 7 to 11, wherein the root certificate is a CVCA certificate.

13. A method (500) for producing a certificate token (100) of a user using an identification service (301) and a production system (303), wherein the certificate token (100) comprises a memory (101), a processor (103) and a communication interface (105), wherein the memory (101) is configured to store a signed personal date of the user and a digital certificate of the user, wherein the processor (103) is configured to generate a public certificate key of the digital certificate, wherein the communication interface (105) is configured to provide the signed personal date and the public certificate key for transmission via a communication network (203) to an electronic certification service (201), to establish an authenticated communication link between the certificate token (100) and the electronic certification service (201) using a Password Authenticated Connection Establishment, PACE, protocol, to transmit the signed personal date and the public certificate key via the authenticated communication link from the certificate token (100) to the electronic certification service (201), and, in response to the provision of the signed personal date and the public certificate key, to receive the digital certificate of the user via the authenticated communication link from the electronic certification service (201) in order to provide the digital certificate, wherein the user is assigned a personal date, and wherein the method (500) comprises the following steps:
providing a root certificate by the production system (303);
storing the root certificate in the memory (101) of the certificate token (100) by the production system (303);
signing (501) the personal date of the user by the identification service (301) with a private signature key of the identification service (301) in order to obtain the signed personal date of the user; and
Storing (503) the signed personal date of the user in the memory (101) of the certificate token (100) by the production system (303) in order to produce the certificate token (100).

14. The method (500) according to claim 13, wherein the root certificate is a CVCA certificate.

15. Computer program with a program code for executing the method (400) for providing a digital certificate of a user according to any one of claims 7 to 12, when the program code is executed on a computer.

## Revendications

1. Jeton de certificat (100) destiné à fournir un certificat numérique d'un utilisateur, comprenant :
une mémoire (101), qui est configurée pour mémoriser un certificat racine, une donnée personnelle signée de l'utilisateur et le certificat numérique de l'utilisateur ;
un processeur (103), qui est configuré pour générer une clé de certificat publique du certificat numérique, et vérifier une authenticité d'un service de certification électronique (201) en utilisant le certificat racine ; et
une interface de communication (105), qui est configurée pour fournir au service de certification électronique (201) la donnée personnelle signée et la clé de certificat publique pour une communication par le biais d'un réseau de communication (203), établir entre le jeton de certificat (100) et le service de certification électronique (201) une liaison de communication authentifiée en utilisant un protocole PACE (Password Authenticated Connection Establishment - Établissement de connexion authentifiée par mot de passe), transmettre la donnée personnelle signée et la clé de certificat publique du jeton de certificat (100) au service de certification électronique (201) par le biais de la liaison de communication authentifiée et, en réaction à la fourniture de la donnée personnelle signée et de la clé de certificat publique, recevoir le certificat numérique de l'utilisateur de la part du service de certification électronique (201) par le biais de la liaison de communication authentifiée afin de fournir le certificat numérique.

2. Jeton de certificat (100) selon la revendication 1, la donnée personnelle signée de l'utilisateur étant signée avec une clé de signature privée d'un service d'identification (301) servant à identifier l'utilisateur.

3. Jeton de certificat (100) selon l'une des revendications précédentes, la donnée personnelle signée comprenant un horodatage et l'horodatage indiquant un instant d'une génération de la donnée personnelle signée.

4. Jeton de certificat (100) selon l'une des revendications précédentes, le certificat racine étant un certificat CVCA.

5. Jeton de certificat (100) selon l'une des revendications précédentes, le processeur (103) étant configuré pour générer une clé de certificat privée du certificat numérique et la clé de certificat privée et la clé de certificat publique formant une paire de clés cryptographique

6. Jeton de certificat (100) selon l'une des revendications précédentes, le certificat numérique étant un certificat de signature destiné à signer des données de l'utilisateur ou un certificat d'authentification destiné à authentifier l'utilisateur.

7. Procédé (400) de fourniture d'un certificat numérique d'un utilisateur en utilisant un jeton de certificat (100) et un service de certification électronique (201), le jeton de certificat (100) comprenant une mémoire (101), un processeur (103) et une interface de communication (105), la mémoire (101) étant configurée pour mémoriser un certificat racine, une donnée personnelle signée de l'utilisateur et le certificat numérique de l'utilisateur, le processeur (103) étant configuré pour générer une clé de certificat publique du certificat numérique, l'interface de communication (105) étant configurée pour fournir au service de certification électronique (201) la donnée personnelle signée et la clé de certificat publique pour une communication par le biais d'un réseau de communication (203) et, en réaction à la fourniture de la donnée personnelle signée et de la clé de certificat publique, recevoir le certificat numérique de l'utilisateur de la part du service de certification électronique (201) afin de fournir le certificat numérique, le procédé (400) comprenant les étapes suivantes :
fourniture (401) de la donnée personnelle signée et de la clé de certificat publique à travers l'interface de communication (105) du jeton de certificat (100) ;
établissement d'une liaison de communication authentifiée entre le jeton de certificat (100) et le service de certification électronique (201) en utilisant un protocole PACE (Password Authenticated Connection Establishment - Établissement de connexion authentifiée par mot de passe) ;
transmission (403) de la donnée personnelle signée et de la clé de certificat publique du jeton de certificat (100) au service de certification électronique (201) par le biais du réseau de communication (203), la transmission (403) de la donnée personnelle signée et de la clé de certificat publique au service de certification électronique (201) comprenant une vérification d'une authenticité du service de certification électronique (201) en utilisant le certificat racine par le processeur (103) du jeton de certificat (100) ;
vérification (405) de la donnée personnelle signée par le service de certification électronique (201) ; génération (407) du certificat numérique de l'utilisateur par le service de certification électronique (201) sur la base de la donnée personnelle signée et de la clé de certificat publique ;
envoi (409) du certificat numérique de l'utilisateur par le biais de la liaison de communication authentifiée par le service de certification électronique (201) au jeton de certificat (100) ; et
mémorisation (411) du certificat numérique de l'utilisateur dans la mémoire (101) du jeton de certificat (100).

8. Procédé (400) selon la revendication 7, la donnée personnelle signée et la clé de certificat publique, à l'étape de fourniture (401), étant envoyées au service de certification électronique (201) par le biais du réseau de communication (203) à travers l'interface de communication (105), et la donnée personnelle signée et la clé de certificat publique, à l'étape de fourniture (401), étant lues par le service de certification électronique (201) par le biais du réseau de communication (203) au travers de l'interface de communication (105).

9. Procédé (400) selon la revendication 7 ou 8, la donnée personnelle signée étant signée avec une clé de signature privée d'un service d'identification (301) servant à identifier l'utilisateur, la vérification (405) de la donnée personnelle signée par le service de certification électronique (201) étant effectuée au moyen d'une clé de contrôle de signature publique du service d'identification (301), et la clé de signature privée du service d'identification (301) et la clé de contrôle de signature publique du service d'identification (301) formant une paire de clés cryptographique.

10. Procédé (400) selon l'une des revendications 7 à 9, la vérification (405) de la donnée personnelle signée par le service de certification électronique (201) comprenant une extraction d'une donnée personnelle de l'utilisateur de la donnée personnelle signée de l'utilisateur et une comparaison de la donnée personnelle extraite avec une liste de blocage par le service de certification électronique (201), la liste de blocage comprenant une pluralité de données personnelles bloquées et la donnée personnelle signée n'étant pas vérifiée dans le cas où la liste de blocage contient la donnée personnelle de l'utilisateur.

11. Procédé (400) selon l'une des revendications 7 à 10, la donnée personnelle signée comprenant un horodatage, l'horodatage indiquant un instant d'une génération de la donnée personnelle signée, la vérification (405) de la donnée personnelle signée par le service de certification électronique (201) comprenant une détermination de l'instant d'une génération de la donnée personnelle signée sur la base de l'horodatage et une comparaison de l'instant déterminé avec un instant de référence, et la donnée personnelle signée n'étant pas vérifiée dans le cas où une différence de temps entre l'instant déterminé et l'instant de référence est supérieure à une différence de temps prédéterminée.

12. Procédé (400) selon l'une des revendications 7 à 11, le certificat racine étant un certificat CVCA.

13. Procédé (500) de création d'un jeton de certificat (100) d'un utilisateur en utilisant un service d'identification (301) et un système de production (303), le jeton de certificat (100) comprenant une mémoire (101), un processeur (103) et une interface de communication (105), la mémoire (101) étant configurée pour mémoriser une donnée personnelle signée de l'utilisateur et un certificat numérique de l'utilisateur, le processeur (103) étant configuré pour générer une clé de certificat publique du certificat numérique, l'interface de communication (105) étant configurée pour fournir à un service de certification électronique (201) la donnée personnelle signée et la clé de certificat publique pour une communication par le biais d'un réseau de communication (203), établir entre le jeton de certificat (100) et le service de certification électronique (201) une liaison de communication authentifiée en utilisant un protocole PACE (Password Authenticated Connection Establishment - Établissement de connexion authentifiée par mot de passe), transmettre la donnée personnelle signée et la clé de certificat publique du jeton de certificat (100) au service de certification électronique (201) par le biais de la liaison de communication authentifiée et, en réaction à la fourniture de la donnée personnelle signée et de la clé de certificat publique, recevoir le certificat numérique de l'utilisateur de la part du service de certification électronique (201) par le biais de la liaison de communication authentifiée afin de fournir le certificat numérique, une donnée personnelle étant associée à l'utilisateur et le procédé (500) comprenant les étapes suivantes :
fourniture d'un certificat racine par le système de production (303) ;
mémorisation du certificat racine dans la mémoire (101) du jeton de certificat (100) par le système de production (303) ;
signature (501) de la donnée personnelle de l'utilisateur par le service d'identification (301) avec une clé de signature privée du service d'identification (301) afin d'obtenir la donnée personnelle signée de l'utilisateur ; et
mémorisation (503) de la donnée personnelle signée de l'utilisateur dans la mémoire (101) du jeton de certificat (100) par le système de production (303) afin de créer le jeton de certificat (100).

14. Procédé (500) selon la revendication 13, le certificat racine étant un certificat CVCA.

15. Programme informatique comprenant un code de programme destiné à mettre en œuvre un procédé (400) de fourniture d'un certificat numérique d'un utilisateur selon les revendications 7 à 12 lorsque le code de programme est exécuté sur un ordinateur.
